# EUROPEAN PATENT APPLICATION

(11) **EP 2 388 304 A1**
(43) Date of publication of application: **23.11.2011**
(21) Application number: 11003750.4
(22) Date of filing: 06.05.2011
(51) Int. Cl.: C09J 7/02, B32B 7/12

(54) **Multi-layer pressure-sensitive adhesive tape**

(30) Priority: 21.05.2010 JP 2010117202
(71) Applicant: Nitto Denko Corporation, Ibaraki-shi, Osaka 567-8680 (JP)
(72) Inventor: Ikishima, Shinsuke, Osaka 567-8680 (JP); Hayashi, Naoto, Osaka 567-8680 (JP); Ooyama, Kooki, Osaka 567-8680 (JP); Hayashi, Keiji, Osaka 567-8680 (JP); Uchida, Shou, Osaka 567-8680 (JP); Takeda, Kouhei, Osaka 567-8680 (JP); Sawazaki, Ryohei, Osaka 567-8680 (JP)
(74) Representative: Müller-Boré & Partner Patentanwälte

(57) **Abstract**

Provided is a novel pressure-sensitive adhesive tape having a moderately weak adhesion during a time period from a production process (during its production) to the time of the accomplishment of the product as a result of the completion of the production (immediately after the production). Accordingly, the peeling failure, or the like, resulting from strong adherence of a pressure-sensitive adhesive layer to a roll or the like at the time of the production can be sufficiently suppressed. As a result, stable product supply can be performed. In addition, even after the lapse of about a half day from immediately after the production, the pressure-sensitive adhesive tape can be easily rewound. On the other hand, the pressure-sensitive adhesive tape can express a sufficiently strong adhesion for an adherend after the lapse of a predetermined time from the production (e.g., at the time of its use). The pressure-sensitive adhesive tape of the present invention includes at least three layers including: a base material layer (A); a first pressure-sensitive adhesive layer (B1); and a second pressure-sensitive adhesive layer (B2) in the stated order, in which: the base material layer (A) contains a thermoplastic resin; the first pressure-sensitive adhesive layer (B1) contains a tackifier at a content of 12 wt% or more; the second pressure-sensitive adhesive layer (B2) contains a tackifier at a content of 10 wt% or less; and the second pressure-sensitive adhesive layer (B2) has a thickness of 10 µm or more.

## Description

### 1. Field of the Invention

The present invention relatesto a pressure-sensitive adhesive tape, and more specifically, to a pressure-sensitive adhesive tape which has such a moderately weak adhesion as described below and which can be easily rewound even after the lapse of about a half day from immediately after its production. The adhesion for an adherend increases with time to finally reach a sufficiently strong level.

A method of producing a laminate of a base material layer obtained through film formation or the like and a pressure-sensitive adhesive layer has been conventionally adopted in the production of a pressure-sensitive adhesive tape. The method involves: applying an organic solvent solution of an acrylic or rubber-based pressure-sensitive adhesive to one surface of the base material layer; and drying the applied solution to form the pressure-sensitive adhesive layer.

However, the above-mentioned production method involves the following problem. The method requires a large number of steps such as a film-forming step and a pressure-sensitive adhesive solution-applying step, and hence leads to a high production cost. In addition, in the above-mentioned production method, the organic solvent is requested to be removed by drying after the application of the pressure-sensitive adhesive solution. Accordingly, the method is problematic in terms of an environmental load resulting from the volatilization of the organic solvent.

The so-called co-extrusion method has been proposed in the production of the pressure-sensitive adhesive tape for solving the above-mentioned problems (Japanese Patent No.4115787). The method involves simultaneously extruding a forming material of the base material layer and a forming material of the pressure-sensitive adhesive layer to laminate the materials.

Examples of the co-extrusion method include a T-die extrusion molding method and an inflation molding method. In the production of the pressure-sensitive adhesive tape by the co-extrusion method, multilayer film formation is performed by laminating resins thermally melted by an extruder in a die, and hence the pressure-sensitive adhesive tape in which the base material layer and the pressure-sensitive adhesive layer are laminated is obtained.

The production of the pressure-sensitive adhesive tape by the co-extrusion method can reduce a production cost because the base material layer and the pressure-sensitive adhesive layer can be laminated by one step. In addition, application involving the use of an organic solvent is not performed in the co-extrusion method. As a result, the volatilization of the organic solvent does not occur, and hence an environmental load can be reduced. In addition, a curtailing effect on the amount of CO₂ can be expected.

In recent years, pressure-sensitive adhesive tapes have been attached to assorted adherends, and have been finding use in applications such as the protection and semi-permanent bonding of products and articles. The pressure-sensitive adhesive tapes are requested to adhere to uneven surfaces particularly in applications such as the protection of functional members, and hence a sufficiently strong adhesion has been requested of each of the pressure-sensitive adhesive tapes.

In order that the adhesion of the pressure-sensitive adhesive layer in the pressure-sensitive adhesive tape produced by the co-extrusion method may be strengthened, a tackifier has been incorporated into the pressure-sensitive adhesive layer. The pressure-sensitive adhesive layer containing the tackifier can express a sufficiently strong adhesion, and has a sufficient adhesion even for an uneven surface.

However, the adoption of the co-extrusion method involves the emergence of the following inconveniences as the adhesion of the pressure-sensitive adhesive layer strengthens.

First, at the time of T-die extrusion molding, the following inconvenience arises. The pressure-sensitive adhesive layer strongly adheres to the surface of any one of various rolls such as a cast roll, and hence its winding around the roll, its failure to peel from the roll, or the like occurs. As a result, stable product supply cannot be performed. In addition,ininflation molding,which involves the step of folding a product as a result of a tubular bubble film-forming process into a flat plate shape with pinch rolls, the following inconvenience arises. The pressure-sensitive adhesive layer strongly adheres to the surface of a stabilizing plate (guide roll) that controls the folding, and hence a wrinkle occurs at the time of the folding. As a result, stable product supply cannot be performed. Further, irrespective of whether the T-die extrusion molding or the inflation molding is performed, the following inconvenience arises. The pressure-sensitive adhesive layer having strong adhering performance strongly adheres to the surface of a nip roll that controls the driving of a production line, and hence a wrinkle occurs. As a result, stable product supply cannot be performed.

It should be noted that such various inconveniences as described above can be solved with a pressure-sensitive adhesive tape in which the pressure-sensitive adhesive layer is protected with a non-adhesive release layer produced as described below (Japanese Patent Application Laid-open No. 2007-185781 and Japanese Patent Application Laid-open No. 2007-290276). The release layer is extruded by the co-extrusion method together with the base material layer and the pressure-sensitive adhesive layer. However, the solution involving the protection of the pressure-sensitive adhesive layer with the release layer requires the peeling and removal of the release layer from the pressure-sensitive adhesive layer upon attachment of the pressure-sensitive adhesive tape to an adherend. As a result, a facility to wind up the peeled release layer is needed in an attachment line for the adherend. Further, such an inconvenience that industrial waste increases owing to the disposal of the release layer formed of a resin material arises.

Further, irrespective of whether the T-die extrusion molding method or the inflationmoldingmethod is adopted, the step of slitting a filmwidth into a specified width, a rewinding (unwinding) operation for making the wound shape (roll shape) of a film better, or the like is performed in a production process for a pressure-sensitive adhesive tape. However, such problems which lead to poor workability as described below arise owing to a raised adhesion of a pressure-sensitive adhesive. A base material film elongates or cannot be rewound, or the pressure-sensitive adhesive causes an anchoring failure (anchorage failure) at the time of the rewinding operation.

To solve such problems, it has been proposed that a release layer be provided for a back surface layer side opposite to the pressure-sensitive adhesive surface of a pressure-sensitive adhesive tape (Japanese Patent Application Laid-open No. 2007-204640) . However, such placement of the release layer is hard to adopt in an application where contamination property due to a low-molecular weight component of a release agent is of concern.

In view of the foregoing, the following novel pressure-sensitive adhesive tape has been requested. The pressure-sensitive adhesive tape has a moderately weak adhesion immediately after its acquisition as a product, i.e., during a time period from a production process (during its production) to the time of the accomplishment of the product as a result of the completion of the production (immediately after the production). Accordingly, a peeling failure, or the like, resulting from strong adherence of a pressure-sensitive adhesive layer to a roll or the like at the time of the production can be sufficiently suppressed. As a result, stable product supply can be performed. In addition, even after the lapse of about a half day from immediately after the production, the pressure-sensitive adhesive tape can be easily rewound. On the other hand, the pressure-sensitive adhesive tape can express a sufficiently strong adhesion for an adherend after the lapse of a predetermined time from the production (e.g., at the time of its use).

The present invention has been made to solve the above-mentioned conventional problems, and an object of the present invention is to provide the following novel pressure-sensitive adhesive tape. The pressure-sensitive adhesive tape has a moderately weak adhesion during a time period from a production process (during its production) to the time of the accomplishment of the product as a result of the completion of the production (immediately after the production). Accordingly, the peeling failure, or the like, resulting from strong adherence of a pressure-sensitive adhesive layer to a roll or the like at the time of the production can be sufficiently suppressed. As a result, stable product supply can be performed. In addition, even after the lapse of about a half day from immediately after the production, the pressure-sensitive adhesive tape can be easily rewound. On the other hand, the pressure-sensitive adhesive tape can express a sufficiently strong adhesion for an adherend after the lapse of a predetermined time from the production (e.g., at the time of its use).

A pressure-sensitive adhesive tape of the present invention includes at least three layers including: a base material layer (A); a first pressure-sensitive adhesive layer (B1) ; and a second pressure-sensitive adhesive layer (B2) in the stated order, in which: the base material layer (A) contains a thermoplastic resin; the first pressure-sensitive adhesive layer (B1) contains a tackifier at a content of 12 wt% ormore; the second pressure-sensitive adhesive layer (B2) contains a tackifier at a content of 10 wt% or less; and the second pressure-sensitive adhesive layer (B2) has a thickness of 10 µm or more.

In a preferred embodiment, the above-mentioned first pressure-sensitive adhesive layer (B1) contains a styrene-based thermoplastic elastomer.

In a preferred embodiment, the above-mentioned second pressure-sensitive adhesive layer (B2) contains a styrene-based thermoplastic elastomer.

In a preferred embodiment, the above-mentioned base material layer (A) contains a polyethylene.

In a preferred embodiment, the above-mentioned base material layer (A) has a thickness of 10 µm to 150 µm.

In a preferred embodiment, the above-mentioned first pressure-sensitive adhesive layer (B1) has a thickness of 1 µm to 300 µm.

In a preferred embodiment, the above-mentioned second pressure-sensitive adhesive layer (B2) has a thickness of 10 µm to 300 µm.

In a preferred embodiment, the pressure-sensitive adhesive tape of the present invention is obtained by a production method involving subjecting at least three materials including a forming material (a) of the above-mentioned base material layer (A), a forming material (b1) of the above-mentioned first pressure-sensitive adhesive layer (B1), and a forming material (b2) of the above-mentioned second pressure-sensitive adhesive layer (B2) to co-extrusion.

According to the present invention, the pressure-sensitive adhesive tape is made to have the base material layer (A), the first pressure-sensitive adhesive layer (B1), and the second pressure-sensitive adhesive layer (B2) in the stated order. In addition, the content of the tackifier in the first pressure-sensitive adhesive layer (B1) is set to 12 wt% or more, the content of the tackifier in the second pressure-sensitive adhesive layer (B2) is set to 10 wt% or less, and the thickness of the second pressure-sensitive adhesive layer (B2) is set to 10 µm or more. As a result, the adhesion of the pressure-sensitive adhesive tape is kept weak upon its production because no tackifier is present on the surface of a pressure-sensitive adhesive layer or only a trace amount of a tackifier is present on the surface. Accordingly, a peeling failure, or the like, resulting from strong adherence of a pressure-sensitive adhesive layer to a roll or the like upon production of the pressure-sensitive adhesive tape can be sufficiently suppressed. As a result, stable product supply can be performed. Further, when the thickness of the second pressure-sensitive adhesive layer (B2) is set to 10 µm or more, the tackifier, which is present in the larger amount in the first pressure-sensitive adhesive layer (B1) upon production of the pressure-sensitive adhesive tape, slowly diffuses over the two layers, i.e., the first pressure-sensitive adhesive layer (B1) and the second pressure-sensitive adhesive layer (B2) in a uniform fashion with time after the production, and hence the tackifier is sufficiently present in the second pressure-sensitive adhesive layer (B2) as well at the time of the use of the pressure-sensitive adhesive tape. As a result, after the lapse of about a half day from immediately after the production, the tackifier is moderately present on the surface of each pressure-sensitive adhesive layer, and hence the pressure-sensitive adhesive tape can be easily rewound. On the other hand, after the lapse of a predetermined time from the production (e. g. , at the time of the use), the pressure-sensitive adhesive tape can express a sufficiently strong adhesion for an adherend because the tackifier is sufficiently present on the surface of the pressure-sensitive adhesive layer.

According to the present invention, there can be provided the following novel pressure-sensitive adhesive tape. The pressure-sensitive adhesive tape has a moderately weak adhesion during a time period from a production process (during its production) to the time of the accomplishment of the product as a result of the completion of the production (immediately after the production). Accordingly, the peeling failure, or the like, resulting from strong adherence of a pressure-sensitive adhesive layer to a roll, or the like at the time of the production can be sufficiently suppressed. As a result, stable product supply can be performed. In addition, even after the lapse of about a half day from immediately after the production, the pressure-sensitive adhesive tape can be easily rewound. On the other hand, the pressure-sensitive adhesive tape can express a sufficiently strong adhesion for an adherend after the lapse of a predetermined time from the production (e.g., at the time of its use).

In the accompanying drawings:
FIG. **1** is a schematic sectional view of a pressure-sensitive adhesive tape (immediately after its production) according to a preferred embodiment of the present invention; and
FIG. **2** is a schematic sectional view of the pressure-sensitive adhesive tape according to a preferred embodiment of the present invention in a state after 24 hours from the production.

### <<A. Pressure-sensitive adhesive tape of the present invention>>

A pressure-sensitive adhesive tape of the present invention has a base material layer (A), a first pressure-sensitive adhesive layer (B1), and a second pressure-sensitive adhesive layer (B2) in the stated order. As described above, the pressure-sensitive adhesive tape of the present invention has at least two pressure-sensitive adhesive layers. The fact that the pressure-sensitive adhesive tape is a laminate of two or more pressure-sensitive adhesive layers can be confirmed by, for example, morphology observation with a transmission electron microscope (TEM), a method involving obliquely cutting the pressure-sensitive adhesive layers (the pressure-sensitive adhesive tape is also permitted) with a surface and interfacial cutting analysis system (SAICAS) or the like and subjecting a plurality of sites of the cut surface to measurement with a microhardness-measuring apparatus such as a nanoindenter, or a method involving cutting a sample frozen with liquid nitrogen or the like and observing the cut surface with an optical microscope or the like.

The pressure-sensitive adhesive tape of the present invention may be formed only of the base material layer (A), the first pressure-sensitive adhesive layer (B1), and the second pressure-sensitive adhesive layer (B2), or may have any appropriate layer except the base material layer (A), the first pressure-sensitive adhesive layer (B1), and the second pressure-sensitive adhesive layer (B2). For example, the pressure-sensitive adhesive tape may have a surface layer (C) on the side of the base material layer (A) opposite to the first pressure-sensitive adhesive layer (B1).

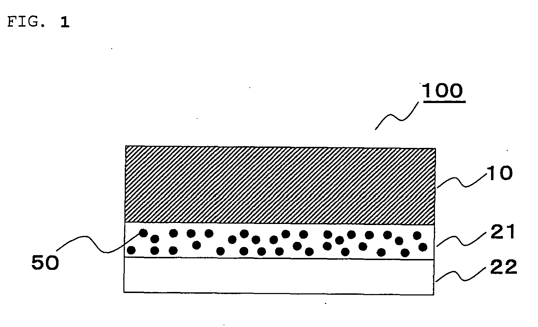

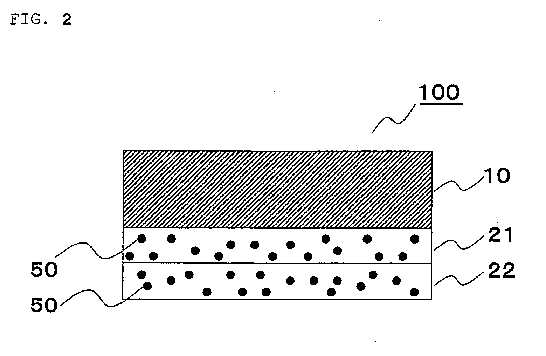

FIG. **1** is a schematic sectional view of the pressure-sensitive adhesive tape of the present invention. FIG. **1** illustrates a pressure-sensitive adhesive tape **100** formed only of a base material layer (A) **10,** a first pressure-sensitive adhesive layer (B1) **21,** and a second pressure-sensitive adhesive layer (B2) **22.** According to the present invention, the content of a tackifier **50** in the first pressure-sensitive adhesive layer (B1) is set to 12 wt% or more and the content of the tackifier 50 in the second pressure-sensitive adhesive layer (B2) is set to 10 wt% or less. As a result, upon production of the pressure-sensitive adhesive tape, the tackifier **50** is not present on the surface of a pressure-sensitive adhesive layer (i.e. , the surface of the second pressure-sensitive adhesive layer (B2) **22),** or only a trace amount of the tackifier is present on the surface. Accordingly, as illustrated in FIG. **1****,** the tackifier **50** is present in the larger amount in the first pressure-sensitive adhesive layer (B1) **21,** and is not present in the second pressure-sensitive adhesive layer (B2) **22** or is present only in a trace amount in the layer immediately after the production (FIG. **1** illustrates a state in which the tackifier **50** is not present in the second pressure-sensitive adhesive layer (B2) **22).** However, **the** tackifier **50** uniformly diffuses slowly over the two layers, i.e., the first pressure-sensitive adhesive layer (B1) **21** and the second pressure-sensitive adhesive layer (B2) **22** with time after the production, and hence the tackifier **50** is sufficiently present in the second pressure-sensitive adhesive layer (B2) **22** as well at the time of the use of the pressure-sensitive adhesive tape. FIG. **2** is a schematic sectional view of the pressure-sensitive adhesive tape **100** when a sufficient time elapses after the production (after 24 hours from the production). The tackifier **50** is illustrated in each of FIGS. **1** and **2** in such a schematic manner as to disperse in the pressure-sensitive adhesive layers with a certain size for ease of visual understanding, but in actuality, the dispersed state is not limited to such schematically illustrated one as long as the tackifier **50** disperses in the pressure-sensitive adhesive layers. In addition, the tackifier in the first pressure-sensitive adhesive layer (B1) and the tackifier in the second pressure-sensitive adhesive layer (B2) may be the same kind of tackifier, or may be different kinds of tackifiers. The same kind of tackifier is preferably used in terms of, for example, a production cost.

The thickness of the base material layer (A) can be set to any appropriate value depending on applications. The thickness is preferably 10 µm to 150 µm, more preferably 20 µm to 100 µm.

The thickness of the first pressure-sensitive adhesive layer (B1) can be set to any appropriate value depending on applications. The thickness is preferably 1 µm to 300 µm, more preferably 1 µm to 100 µm, still more preferably 1 µm to 50 um.

The thickness of the second pressure-sensitive adhesive layer (B2) is 10 µm or more, preferably 10 µm to 300 µm, more preferably 10 µm to 100 µm, still more preferably 10 µm to 50 µm. When the thickness of the second pressure-sensitive adhesive layer (B2) is 10 µm or more, the tackifier, which is present in the larger amount in the first pressure-sensitive adhesive layer (B1) upon production of the pressure-sensitive adhesive tape, slowly diffuses over the two layers, i.e., the first pressure-sensitive adhesive layer (B1) and the second pressure-sensitive adhesive layer (B2) in a uniform fashion with time after the production, and hence the tackifier is sufficiently present in the second pressure-sensitive adhesive layer (B2) as well at the time of the use of the pressure-sensitive adhesive tape. As a result, after the lapse of about a half day from immediately after the production, the tackifier is moderately present on the surface of each pressure-sensitive adhesive layer, and hence the pressure-sensitive adhesive tape can be easily rewound. On the other hand, after the lapse of a predetermined time from the production (e. g. , at the time of the use), the pressure-sensitive adhesive tape can express a sufficiently strong adhesion for an adherend because the tackifier is sufficiently present on the surface of the pressure-sensitive adhesive layer.

The thickness of the surface layer (C) can be set to any appropriate value depending on applications. The thickness is preferably 1 µm to 300 µm, more preferably 1 µm to 100 µm.

The pressure-sensitive adhesive tape of the present invention has an adhesive strength immediately after its production for a stainless plate measured in conformity with JIS Z 0237 (2000) of preferably 0.7 N/20 mm or less, more preferably 0.01 N/20 mm to 0.7 N/20 mm or less, still more preferably 0.1 N/20 mm to 0.7 N/20 mm, particularly preferably 0.2 N/20 mm to 0.6 N/20 mm. As long as the adhesive strength immediately after the production for a stainless plate measured in conformity with JIS Z 0237 (2000) is 0.7 N/20 mm or less, the peeling failure, or the like, resulting from strong adherence of the pressure-sensitive adhesive layer to a roll or the like can be sufficiently suppressed at the time of the production. As a result, stable product supply can be performed.

When the thickness of the second pressure-sensitive adhesive layer (B2) is 10 µm or more, the tackifier, which is present in the larger amount in the first pressure-sensitive adhesive layer (B1) upon production of the pressure-sensitive adhesive tape of the present invention, slowly diffuses over the two layers, i.e., the first pressure-sensitive adhesive layer (B1) and the second pressure-sensitive adhesive layer (B2) in a uniform fashion with time after the production, and hence the tackifier is sufficiently present in the second pressure-sensitive adhesive layer (B2) as well at the time of the use of the pressure-sensitive adhesive tape. As a result, after the lapse of about a half day from immediately after the production, the tackifier is moderately present on the surface of each pressure-sensitive adhesive layer, and hence the pressure-sensitive adhesive tape can be easily rewound. Therefore, the pressure-sensitive adhesive tape of the present invention has an adhesive strength after the lapse of 12 hours from immediately after its production for a stainless plate measured in conformity with JIS Z 0237 (2000) of preferably 1.5 N/20 mm or less, more preferably 0.01 N/20 mm to 1.5 N/20 mm, still more preferably 0.1 N/20 mm to 1.0 N/20 mm, particularly preferably 0.2 N/20 mm to 0.7 N/20 mm.

### <<A-1. Base material layer (A) >>

The base material layer (A) contains a thermoplastic resin. Any appropriate resin can be adopted as the thermoplastic resin as long as film forming by melt extrusion can be performed. Examples of the thermoplastic resin include: polyolefin resins such as a propylene-based polymer, a polyethylene, and an olefin-based thermoplastic elastomer (TPO) and modified products thereof; α-olefin-vinyl compound (such as vinyl acetate and a (meth) acrylate) copolymers; polyamides; polyesters; polycarbonates; polyurethanes; and polyvinyl chlorides. Examples of the propylene-based polymer include a homopolypropylene, a block polypropylene, and a random polypropylene.

When a homopolypropylene is used as the above-mentioned thermoplastic resin, the structure of the homopolypropylene may be any one of an isotactic structure, an atactic structure, and a syndiotactic structure.

When a polyethylene is used as the above-mentioned thermoplastic resin, the polyethylene may be any one of a low-density polyethylene, a medium-density polyethylene, and a high-density polyethylene.

In the base material layer (A), the above-mentioned thermoplastic resins may be incorporated alone or in combination. Examples of a form in which two or more kinds of the resins are incorporated in combination include a form in which the resins are blended and a form in which the resins are copolymerized. A commercially available product may be used as the above-mentioned thermoplastic resin.

The base material layer (A) can contain any appropriate additive as required. Examples of such additive include a UV absorbing agent, a thermal stabilizer, a filler, and a lubricant. The kinds, number, and amount of additives to be incorporated into the base material layer (A) can be appropriately set depending on purposes.

Examples of the above-mentioned UV absorbing agent include a benzotriazole-based compound, a benzophenone-based compound, and a benzoate-based compound. Any appropriate content can be adopted as the content of the above-mentioned UV absorbing agent as long as the agent does not bleed out at the time of the forming of the pressure-sensitive adhesive tape. The content is preferably 0.01 part by weight to 5 parts by weight with respect to 100 parts by weight of the thermoplastic resin in the base material layer (A).

Examples of the above-mentioned thermal stabilizer include a hindered amine-based compound, a phosphorus-based compound, and a cyanoacrylate-based compound. Any appropriate content can be adopted as the content of the above-mentioned thermal stabilizer as long as the stabilizer does not bleed out at the time of the forming of the pressure-sensitive adhesive tape. The content is preferably 0.01 part by weight to 5 parts by weight with respect to 100 parts by weight of the thermoplastic resin in the base material layer (A).

Examples of the above-mentioned filler include inorganic fillers such as talc, titanium oxide, calcium carbonate, clay, mica, barium sulfate, whisker, and magnesium hydroxide. The filler preferably has an average particle diameter of 0.1 µm to 10 µm. The content of the filler is preferably 1 part by weight to 200 parts by weight with respect to 100 parts by weight of the thermoplastic resin in the base material layer (A).

### <<A-2. First pressure-sensitive adhesive layer (B1)>>

The first pressure-sensitive adhesive layer (B1) contains any appropriate thermoplastic resin. Only one kind of a thermoplastic resin may be used, or two or more kinds of thermoplastic resins may be used in combination.

The content of the above-mentioned thermoplastic resin in the first pressure-sensitive adhesive layer (B1) is preferably 30 wt% to 88 wt%, more preferably 35 wt% to 85 wt%, still more preferably 40 wt% to 80 wt%. When the content of the above-mentioned thermoplastic resin in the first pressure-sensitive adhesive layer (B1) falls within the above-mentioned range, the resultant pressure-sensitive adhesive tape can express an additionally strong adhesion at the time of its use.

As the above-mentioned thermoplastic resin, a thermoplastic elastomer is preferred. Examples of the thermoplastic elastomer include a styrene-based thermoplastic elastomer and an acrylic elastomer. The styrene-based thermoplastic elastomer is preferred. In addition, there is also given a particular block copolymer elastomer such as an olefin crystal/ethylene-butylene/olefin crystal block copolymer (CEBC). CEBC is available, for example, from a series of products available under the trade name "DYNARON" from JSR Corporation.

Examples of the styrene-based thermoplastic elastomer include: styrene-based AB-type diblock copolymers such as a styrene-ethylene-butylene copolymer (SEB); styrene-based ABA-type triblock copolymers such as a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (styrene-ethylene-propylene-styrene copolymer (SEPS)), a styrene-isobutylene-styrene copolymer (SIBS); styrene-based ABAB-type tetrablock copolymers such as styrene-butadiene-styrene-butadiene (SBSB); styrene-based ABABA-type pentablock copolymers such as styrene-butadiene-styrene-butadiene-styrene (SBSBS); styrene-based multi-block copolymers each having six or more of A-B repeat units; and hydrogenated products each obtained by hydrogenating ethylenic double bonds of a styrene-based random copolymer such as a styrene-butadiene rubber (SBR).

The content of a styrene block structure in the above-mentioned styrene-based block copolymer is preferably 5 wt% to 40 wt%, more preferably 7 wt% to 30 wt%, particularly preferably 9 wt% to 20 wt%. When the content of the styrene block structure is smaller than 5 wt%, an adhesive residue due to an insufficient cohesive strength of the pressure-sensitive adhesive layer is apt to occur. When the content of the styrene block structure is larger than 40 wt%, the pressure-sensitive adhesive layer becomes hard, and hence good adhesion for a rough surface may not be obtained.

When the above-mentioned styrene-based block copolymer has an ethylene-butylene block structure, the content of a structural unit derived from butylene in the ethylene-butylene block structure is preferably 50 wt% or more, more preferably 60 wt% or more, particularly preferably 70 wt% or more, most preferably 70 wt% to 90 wt%. As long as the content of the structural unit derived from butylene falls within such range, a pressure-sensitive adhesive layer excellent in wettability and adhesion, and capable of being favorably bonded even to a rough surface can be obtained.

A commercially available styrene-based thermoplastic elastomer may be used. As the commercially available styrene-based thermoplastic elastomer, there are specifically given a "G1657" (styrene-based elastomer) manufactured by Kraton Polymers and a "TUFTEC H1062" (styrene-based elastomer)manufactured by Asahi Kasei Chemicals Corporation, for example.

The styrene-based thermoplastic elastomers may be used alone or in combination.

Examples of the acrylic thermoplastic elastomer include: a polymethyl methacrylate-polybutyl acrylate-polymethyl methacrylate copolymer (PMNlA-PBA-PMMA copolymer); and a PMMA-functional group-containing PBA-PMMA copolymer having a carboxylic acid as a functional group in a polybutyl acrylate. A commercially available acrylic thermoplastic resin may be used. Specific examples of the commercially available acrylic thermoplastic resin include a product available under the trade name "NABSTAR" from Kaneka Corporation and a product available under the trade name "LA polymer" from KURARAY CO., LTD.

The acrylic thermoplastic elastomers may be used alone or in combination.

The first pressure-sensitive adhesive layer (B1) may contain any other appropriate pressure-sensitive adhesive. As such pressure-sensitive adhesive, there are given a rubber-based pressure-sensitive adhesive, an acrylic pressure-sensitive adhesive, and a silicone-based pressure-sensitive adhesive, for example.

The pressure-sensitive adhesive layer can contain any other component as required. Examples of the other component include: an olefin-based resin; a silicone-based resin; a liquid acrylic copolymer; a polyethylenimine; a fatty acid amide; a phosphate; and a general additive. The kinds, number, and amount of other components to be incorporated into the pressure-sensitive adhesive layer can be appropriately set depending on purposes. Examples of the additive include: a tackifier; a softening agent; an antioxidant; a hindered amine-based light stabilizer; a UV absorbing agent; a thermal stabilizer; and a filler or pigment such as calcium oxide, magnesium oxide, silica, zinc oxide, or titanium oxide. The description in the above-mentioned section A-1 is incorporated by reference for the UV absorbing agent and the thermal stabilizer.

In the present invention, the first pressure-sensitive adhesive layer (B1) contains the tackifier. The tackifier is effective for the expression of a strong adhesion.

The content of the tackifier in the first pressure-sensitive adhesive layer (B1) can be appropriately set to any appropriate content depending on an adherend in order that the occurrence of an adhesive residue problem due to a reduction in cohesive strength may be avoided. The content of the tackifier in the first pressure-sensitive adhesive layer (B1) is 12 wt% or more, preferably 12wt%to70wt%, more preferably 15 wt% to 65 wt%, still more preferably 20 wt% to 60 wt%.

Examples of the tackifier include: petroleum-based resins such as an aliphatic copolymer, an aromatic copolymer, an aliphatic/aromatic copolymer system, and an alicyclic copolymer; coumarone-indene-based resins; terpene-based resins; terpene-phenol-based resins; rosin-based resins such as polymerized rosin; (alkyl) phenol-based resins; xylene-based resins; and hydrogenated products of the resins. The tackifiers may be used alone or in combination.

A hydrogenated tackifier such as an "ARKON P-125" manufactured by Arakawa Chemical Industries, Ltd. is preferably used as the tackifier in terms of, for example, peeling property and weatherability. It should be noted that a product commercially available as a blend with an olefin resin or thermoplastic elastomer can also be used as the tackifier.

The compounding of the softening agent is effective for an improvement in adhesion. Examples of the softening agent include a low-molecular-weight diene-based polymer, a polyisobutylene, a hydrogenated polyisoprene, a hydrogenated polybutadiene, and derivatives thereof. Examples of the derivatives include those each having an OH group or COOH group on one of, or each of both of, its terminals. Specific examples of such derivatives include a hydrogenated polybutadiene diol, a hydrogenated polybutadiene monool, a hydrogenated polyisoprene diol, and a hydrogenated polyisoprene monool. A hydrogenated product of a diene-based polymer such as a hydrogenated polybutadiene or a hydrogenated polyisoprene, an olefin-based softening agent, or the like is preferred in order that a rise in adhesion for the adherend may be additionally suppressed. Specifically, a "Kuraprene LIR-200" manufactured by KURARAY CO., LTD. or the like is given. Those softening agents may be used alone or in combination.

The molecular weight of the softening agent can be suitably set to any appropriate value. When the molecular weight of the softening agent is excessively small, the small molecular weight may cause, for example, the transfer of a substance from the pressure-sensitive adhesive layer to the adherend or heavy peeling. On the other hand, when the molecular weight of the softening agent is excessively large, an improving effect on the adhesive strength tends to be poor. Accordingly, the number-average molecular weight of the softening agent is preferably 5, 000 to 100,000, more preferably 10,000 to 50,000.

As the compounding ratio of the softening agent in the first pressure-sensitive adhesive layer (B1), any appropriate amount can be adopted. When the compounding amount of the softening agent is excessively large, the amount of an adhesive residue at the time of exposure to high temperatures or outdoors tends to increase. Accordingly, the compounding ratio of the softening agent in the first pressure-sensitive adhesive layer (B1) is preferably 40 wt% or less, more preferably 20 wt% or less, still more preferably 10 wt% or less.

The first pressure-sensitive adhesive layer (B1) may be subj ected to a surface treatment as required. Examples of the surface treatment include a corona discharge treatment, a UV irradiation treatment, a flame treatment, a plasma treatment, and a sputter etching treatment.

### <<A-3. Second pressure-sensitive adhesive layer (B2) >>

The description on the first pressure-sensitive adhesive layer (B1) in the above-mentioned section A-2 is incorporated by reference for the second pressure-sensitive adhesive layer (B2) except that the content of the tackifier in the pressure-sensitive adhesive layer (B2) is 10 wt% or less. The thermoplastic resin (preferably a styrene-based thermoplastic elastomer) used in the first pressure-sensitive adhesive layer (B1) and a thermoplastic resin (preferably a styrene-based thermoplastic elastomer) used in the second pressure-sensitive adhesive layer (B2) may be of the same kind, or may be of different kinds. The thermoplastic resins are preferably of the same kind. The content of the tackifier in the pressure-sensitive adhesive layer (B2) is preferably 0 wt% to 10 wt%, more preferably 0 wt% to 8 wt%, still more preferably 0 wt% to 5 wt%, particularly preferably 0 wt% to 2 wt%, particularly preferably substantially 0 wt%. It should be noted that the phrase "substantially 0 wt%" refers to the case where a measured value meaning 0 wt% is obtained upon measurement of the content by a method that generally allows a person skilled in the art to perform the measurement.

That is, in the present invention, it is important that the content of the tackifier in the second pressure-sensitive adhesive layer (B2) be 10 wt% or less. When the content of the tackifier in the first pressure-sensitive adhesive layer (B1) is set to 12 wt% or more, the content of the tackifier in the second pressure-sensitive adhesive layer (B2) is set to 10 wt% or less, and the thickness of the second pressure-sensitive adhesive layer (B2) is set to 10 µm or more, the adhesion of the pressure-sensitive adhesive tape is kept weak upon its production because no tackifier is present on the surface of a pressure-sensitive adhesive layer or only a trace amount of a tackifier is present on the surface. Accordingly, a peeling failure, or the like, resulting from strong adherence of a pressure-sensitive adhesive layer to a roll or the like upon production of the pressure-sensitive adhesive tape can be sufficiently suppressed. As a result, stable product supply can be performed. Further, when the thickness of the second pressure-sensitive adhesive layer (B2) is set to 10 µm or more, the tackifier, which is present in the larger amount in the first pressure-sensitive adhesive layer (B1) upon production of the pressure-sensitive adhesive tape, slowly diffuses over the two layers, i.e., the first pressure-sensitive adhesive layer (B1) and the second pressure-sensitive adhesive layer (B2) in a uniform fashion with time after the production, and hence the tackifier is sufficiently present in the second pressure-sensitive adhesive layer (B2) as well at the time of the use of the pressure-sensitive adhesive tape. As a result, after the lapse of about a half day from immediately after the production, the tackifier is moderately present on the surface of each pressure-sensitive adhesive layer, and hence the pressure-sensitive adhesive tape can be easily rewound. On the other hand, after the lapse of a predetermined time from the production (e. g. , at the time of the use), the pressure-sensitive adhesive tape can express a sufficiently strong adhesion for an adherend because the tackifier is sufficiently present on the surface of the pressure-sensitive adhesive layer.

### <<A-4. Surface layer (C) >>

The pressure-sensitive adhesive tape of the present invention may have the surface layer (C) on the side of the base material layer (A) opposite to the first pressure-sensitive adhesive layer (B1).

The surface layer (C) is laminated together with the second pressure-sensitive adhesive layer (B2) in, for example, the case where the pressure-sensitive adhesive tape of the present invention is stored in a roll shape. Therefore, the surface layer (C) is requested to have good peeling property from the second pressure-sensitive adhesive layer (B2), and the surface layer (C) preferably contains a peeling agent. When the surface layer (C) contains the peeling agent, the attachment of the surface layer (C) and the second pressure-sensitive adhesive layer (B2) in a state in which portions of the pressure-sensitive adhesive tape of the present invention overlap each other such as storage of the pressure-sensitive adhesive tape in a roll shape can be prevented. In addition, there is no need to cover the surface layer (C) with a separator layer, and hence a pressure-sensitive adhesive tape having a desired haze value and desired surface roughness can be easily obtained.

When the surface layer (C) is formed by co-extrusion, a long-chain alkyl-based peeling agent can be preferably adopted as the peeling agent.

The long-chain alkyl-based peeling agent contains a long-chain alkyl-based polymer. The long-chain alkyl-based polymer can be obtained by causing a polymer having a reactive group and a compound having an alkyl group capable of reacting with the reactive group to react with each other in any appropriate heated solvent. A catalyst may be used as required at the time of the reaction. Examples of the catalyst include a tin compound and a tertiary amine.

Examples of the above-mentioned reactive group include a hydroxyl group, an amino group, a carboxyl group, and a maleic anhydride group. Examples of a polymer having the reactive group include an ethylene-vinyl alcohol copolymer, polyvinyl alcohol, a polyethylenimine, a polyethylenamine, and a styrene-maleic anhydride copolymer. Of those, an ethylene-vinyl alcohol copolymer is preferred. It should be noted that the term "ethylene-vinyl alcohol copolymer" also includes a partially saponified product of an ethylene-vinyl acetate copolymer. The term "polyvinyl alcohol" also includes a partially saponified product of polyvinyl acetate.

The number of carbon atoms of the above-mentioned alkyl group is preferably 8 to 30, more preferably 12 to 22. When the number of carbon atoms of the above-mentioned alkyl group falls within such range, a surface layer (C) having excellent peeling property can be obtained. Specific examples of such alkyl group include a lauryl group, a stearyl group, and a behenyl group. Examples of a compound having such alkyl group (that is, compound having an alkyl group capable of reacting with the above-mentioned reactive group) include: isocyanates such as octyl isocyanate, decyl isocyanate, lauryl isocyanate, and stearyl isocyanate; acid chlorides; amines; and alcohols. Of those, isocyanates are preferred.

The long-chain alkyl-based polymer has a weight-average molecular weight of preferably 10,000 to 1, 000, 000, more preferably 20,000 to 1,000,000. When the weight-average molecular weight of the long-chain alkyl-based polymer falls within such range, a surface layer (C) having excellent peeling property can be obtained.

The content of the long-chain alkyl-based peeling agent in the surface layer (C) is preferably 1 wt% to 50 wt%, more preferably 2 wt% to 30 wt%, particularly preferably 5 wt% to 20 wt%. When the content is smaller than 1 wt%, an effect of the addition of the long-chain alkyl-based peeling agent may not be obtained. When the content is larger than 50 wt%, a bleed product may be produced.

The surface layer (C) can contain any appropriate resin component for forming the layer. Examples of such resin component include a thermoplastic resin. For example, any one of the thermoplastic resins described in the section A-1 can be used.

When the surface layer (C) is formed by application, for example, a long-chain alkyl-based peeling agent, a fluorine-containing, long-chain alkyl-based peeling agent, or a silicone-based peeling agent can be adopted as the peeling agent. Examples of the silicone-based peeling agent include an addition reaction-type thermosetting peeling agent, a condensation reaction-type thermosetting peeling agent, and a peeling agent that is curable with radiation such as UV light or an electron beam.

The surface layer (C) can contain any appropriate additive as required. For example, any one of the additives described in the section A-1 can be used as the additive that can be incorporated into the surface layer (C).

### <<B. Method of producing pressure-sensitive adhesive tape of the present invention>>

A method of producing the pressure-sensitive adhesive tape of the present invention includes the step of subjecting at least three materials including a forming material (a) of the base material layer (A), a forming material (b1) of the first pressure-sensitive adhesive layer (B1), and a forming material (b2) of the second pressure-sensitive adhesive layer (B2) to co-extrusion.

Any appropriate method can be adopted as a forming method based on co-extrusion. Examples of such method include a T-die extrusion molding method and an inflation molding method. In each of those molding methods, multilayer film formation is performed by laminating resins thermally melted by an extruder in a die. Any appropriate condition can be adopted as a molding condition in each of those molding methods.

When the surface layer (C) is provided on the side of the base materiallayer(A) opposite to the first pressure-sensitive adhesive layer (B1) in the method of producing the pressure-sensitive adhesive tape of the present invention, the surface layer (C) may be provided by subjecting a forming material (c) of the surface layer (C) to co-extrusion together with the other materials to be subjected to co-extrusion, or may be provided by applying an application liquid containing the forming material (c) of the surface layer (C).

That is, in one preferred embodiment for the formation of the surface layer (C), the above-mentioned materials to be subjected to co-extrusion further includes the forming material (c) of the surface layer (C) on the side of the base material layer (A) opposite to the first pressure-sensitive adhesive layer (B1), and the material (c) contains a peeling agent. In another preferred embodiment for the formation of the surface layer (C), the method of producing the pressure-sensitive adhesive tape of the present invention further includes the step of applying an application liquid containing the material (c) containing the peeling agent to the side of the base material layer (A) opposite to the first pressure-sensitive adhesive layer (B1) to form the surface layer (C) .

### <<B-1. Forming material (a) of base material layer (A) >>

The forming material (a) of the base material layer (A) contains a thermoplastic resin. The description on the thermoplastic resin in the section A-1 can be incorporated by reference for such thermoplastic resin.

The forming material (a) of the base material layer (A) can contain any appropriate additive as required. The description on the additive in the section A-1 can be incorporated by reference for such additive.

### <<B-2. Forming material (b1) of first pressure-sensitive adhesive layer (B1) >>

The forming material (b1) of the first pressure-sensitive adhesive layer (B1) can contain any appropriate thermoplastic resin. The description on the thermoplastic resin in the section A-2 can be incorporated by reference for such thermoplastic resin.

The material (b1) may contain any appropriate other pressure-sensitive adhesive. The description on the pressure-sensitive adhesive in the section A-2 can be incorporated by reference for such pressure-sensitive adhesive.

The forming material (b1) of the first pressure-sensitive adhesive layer (B1) can contain any other component as required. The description on the other component in the section A-2 can be incorporated by reference for the other component.

In the present invention, the material (b1) contains a tackifier. The tackifier is effective for the expression of a strong adhesion.

The content of the tackifier in the material (b1) is appropriately set to any appropriate content depending on an adherend in order that the occurrence of an adhesive residue problem due to a reduction in cohesive strength may be avoided. The content of the tackifier in the material (b1) is preferably 12 wt% to 70 wt%, more preferably 15 wt% to 65 wt%, still more preferably 20 wt% to 60 wt%.

The description on the tackifier in the section A-2 can be incorporated by reference for the tackifier.

The compounding of a softening agent is effective for an improvement in adhesion. The description on the softening agent in the section A-2 can be incorporated by reference for the softening agent.

The first pressure-sensitive adhesive layer (B1) obtained from the material (b1) may be subjected to a surface treatment as required. The description on the surface treatment in the section A-2 can be incorporated by reference for the surface treatment.

### <<B-3. Forming material (b2) of second pressure-sensitive adhesive layer (B2) >>

The description on the forming material (b1) of the first pressure-sensitive adhesive layer (B1) in the above-mentioned section B-2 is incorporated by reference for the forming material (b2) of the second pressure-sensitive adhesive layer (B2) except that the content of the tackifier in the material (b2) is 10 wt% or less. The thermoplastic resin (preferably a styrene-based thermoplastic elastomer) used in the material (b1) and a thermoplastic resin (preferably a styrene-based thermoplastic elastomer) used in the material (b2) may be of the same kind, or may be of different kinds. The thermoplastic resins are preferably of the same kind.

### <<B-4. Forming material (c) of surface layer (C) >>

When the surface layer (C) is provided on the side of the base material layer (A) opposite to the first pressure-sensitive adhesive layer (B1) in the method of producing the pressure-sensitive adhesive tape of the present invention, the surface layer (C) may be provided by subjecting the forming material (c) of the surface layer (C) to co-extrusion together with the other materials to be subjected to co-extrusion, or may be provided by applying an application liquid containing the forming material (c) of the surface layer (C). That is, in one preferred embodiment for the formation of the surface layer (C), the above-mentioned materials to be subjected to co-extrusion further includes the forming material (c) of the surface layer (C) on the side of the base material layer (A) opposite to the first pressure-sensitive adhesive layer (B1). In another preferred embodiment for the formation of the surface layer (C), the method of producing the pressure-sensitive adhesive tape of the present invention further includes the step of applying an application liquid containing the formingmaterial (c) of the surface layer (C) to the side of the base material layer (A) opposite to the first pressure-sensitive adhesive layer (B1) to form the surface layer (C).

The surface layer (C) is laminated together with the second pressure-sensitive adhesive layer (B2) in, for example, the case where the pressure-sensitive adhesive tape of the present invention is stored in a roll shape. Therefore, the surface layer (C) is requested to have good peeling property from the second pressure-sensitive adhesive layer (B2), and the material (c) preferably contains a peeling agent. When the forming material (c) of the surface layer (C) contains the peeling agent, the attachment of the surface layer (C) and the second pressure-sensitive adhesive layer (B2) in a state in which portions of the pressure-sensitive adhesive tape of the present invention overlap each other such as the storage of the pressure-sensitive adhesive tape in a roll shape can be prevented. In addition, there is no need to cover the surface layer (C) with a separator layer, and hence a pressure-sensitive adhesive tape having a desired haze value and desired surface roughness can be easily obtained.

When the surface layer (C) is formed by co-extrusion, a long-chain alkyl-based peeling agent can be preferably adopted as the peeling agent.

The description on the long-chain alkyl-based peeling agent in the sectionA-4 can be incorporated by reference for the long-chain alkyl-based peeling agent.

The forming material (c) of the surface layer (C) can contain any appropriate resin component for layer formation. Such resin component is, for example, a thermoplastic resin, and for example, any one of the thermoplastic resins described in the section A-1 can be used.

When the surface layer (C) is formed by application, for example, a long-chain alkyl-based peeling agent, a fluorine-containing, long-chain alkyl-based peeling agent, or a silicone-based peeling agent can be adopted as the peeling agent. Examples of the silicone-based peeling agent include an addition reaction-type thermosetting peeling agent, a condensation reaction-type thermosetting peeling agent, and a peeling agent that is curable with radiation such as UV light or an electron beam.

The surface layer (C) can contain any appropriate additive as required. For example, any one of the additives described in the section A-1 can be used as the additive that can be incorporated into the surface layer (C).

Hereinafter, the present invention is specifically described by way of examples. However, the present invention is by no means limited by these examples. It should be noted that, in the examples and the like, test and evaluation methods are as described below, and the term "part(s)" means "part(s) by weight".

### <<Evaluation for adhesion>>

The adhesive strength of a pressure-sensitive adhesive tape was measured in conformity with JIS Z 0237 (2000). A test sample cut into a predetermined width (20 mm) was attached to a stainless plate (SUS430BA), and was then crimped at a load of 2 kg with a rubber roller once. After that, the resultant was left to stand under an environment having a temperature of 23°C for 30 minutes. The sample was peeled in a 180° direction at a tension speed of 300 mm/min, and a resistance at the time was defined as the adhesion of the test sample for the stainless plate. All peeling operations were performed under an environment having a temperature of 23°C and a humidity of 65%RH (relative humidity). Adhesive strengths were measured immediately after the production of the sample, after the storage of the sample for 12 hours at the above-mentioned temperature and humidity after the production, and after the storage of the sample for 24 hours at the above-mentioned temperature and humidity after the production.

### <<Evaluation for peeling property from guide roll>>

With regard to peeling property from a guide roll, a situation where a tape sample peeled off an aluminum guide roll was visually evaluated during the production of the tape sample with a three-kind, three-layer T-die extrusion apparatus in which the aluminum guide roll was installed.
○ : The tape sample does not wind around the guide roll, and hence no sound occurs at the time of its peeling from the roll.
× : The tape sample is bonded to the guide roll, and hence a peeling sound occurs at the time of its peeling.

### <<Evaluation for rewinding property (unwinding ability) after lapse of 12 hours from immediately after production>>

With regard to rewinding property after the lapse of 12 hours from immediately after production, a tape sample after the lapse of 12 hours from immediately after the production of the sample by a T-die method was rewound, and was visually evaluated for its handleability.
○: The tape can be easily rewound.
× : Heavy peeling occurs at the time of the rewinding, and the tape deforms.

### [Example 1]

The following compounds were prepared as a forming material of a base material layer, a forming material of a first pressure-sensitive adhesive layer, and a forming material of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 50 parts by weight of a styrene-based thermoplastic elastomer formed of a hydrogenated product of a styrene-butadiene-based copolymer (G1657 manufactured by Kraton Polymers) and 50 parts by weight of a tackifier (ARKON P-125 manufactured by Arakawa Chemical Industries, Ltd.)

Forming material of second pressure-sensitive adhesive layer: A styrene-based thermoplastic elastomer formed of a hydrogenated product of a styrene-butadiene-based copolymer (G1657 manufactured by Kraton Polymers)

The above-mentioned materials were formed by three-kind, three-layer T-die co-extrusion. Thus, a film-shaped pressure-sensitive adhesive tape (1A) (thickness: base material layer/first pressure-sensitive adhesive layer/second pressure-sensitive adhesive layer=40 µm/10 µm/10 µm) was obtained.

The pressure-sensitive adhesive tape (1A) was evaluated for its adhesion, peeling property from a guide roll, and rewinding property after the lapse of 12 hours from immediately after its production.

Table 1 shows the results.

### [Example 2]

The following compounds were prepared as a forming material of a base material layer, a forming material of a first pressure-sensitive adhesive layer, and a formingmaterial of a second pressure-sensitive adhesive layer.

Forming material of base material layer: A low-density polyethylene (G201 manufactured by Sumitomo Chemical Co., Ltd.) Forming material of first pressure-sensitive adhesive layer: A mixture of 50 parts by weight of a styrene-based thermoplastic elastomer formed of a hydrogenated product of a styrene-butadiene-based copolymer (TUFTEC H1062 manufactured by Asahi Kasei Corporation) and 50 parts by weight of a tackifier (ARKON P-125 manufactured by Arakawa Chemical Industries, Ltd.)

Forming material of second pressure-sensitive adhesive layer: A styrene-based thermoplastic elastomer formed of a hydrogenated product of a styrene-butadiene-based copolymer (G1657 manufactured by Kraton Polymers)

The above-mentioned materials were formed by three-kind, three-layer T-die co-extrusion. Thus, a film-shaped pressure-sensitive adhesive tape (2A) (thickness: base material layer/first pressure-sensitive adhesive layer/second pressure-sensitive adhesive layer=40 µm/10 µm/10 µm) was obtained.

The pressure-sensitive adhesive tape (2A) was evaluated for its adhesion, peeling property from a guide roll, and rewinding property after the lapse of 12 hours from immediately after its production.

Table 1 shows the results.

### [Example 3]

The following compounds were prepared as a forming material of a base material layer, a forming material of a first pressure-sensitive adhesive layer, and a forming material of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 50 parts by weight of a styrene-based thermoplastic elastomer formed of a hydrogenated product of a styrene-butadiene-based copolymer (TUFTEC H1041 manufactured by Asahi Kasei Corporation) and 50 parts by weight of a tackifier (ARKON P-125 manufactured by Arakawa Chemical Industries, Ltd.)

Forming material of second pressure-sensitive adhesive layer: A styrene-based thermoplastic elastomer formed of a hydrogenated product of a styrene-butadiene-based copolymer (TUFTEC H1062 manufactured by Asahi Kasei Corporation)

The above-mentioned materials were formed by three-kind, three-layer T-die co-extrusion. Thus, a film-shaped pressure-sensitive adhesive tape (3A) (thickness: base material layer/first pressure-sensitive adhesive layer/second pressure-sensitive adhesive layer=40 µm/10 µm/10 µm) was obtained.

The pressure-sensitive adhesive tape (3A) was evaluated for its adhesion, peeling property from a guide roll, and rewinding property after the lapse of 12 hours from immediately after its production.

Table 1 shows the results.

### [Example 4]

The following compounds were prepared as a forming material of a base material layer, a forming material of a first pressure-sensitive adhesive layer, and a formingmaterial of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 60 parts by weight of a styrene-based thermoplastic elastomer formed of a hydrogenated product of a styrene-butadiene-based copolymer (TUFTEC H1062 manufactured by Asahi Kasei Corporation) and 40 parts by weight of a tackifier (ARKON P-125 manufactured by Arakawa Chemical Industries, Ltd.)

Forming material of second pressure-sensitive adhesive layer: A mixture of 90 parts by weight of a styrene-based thermoplastic elastomer formed of a hydrogenated product of a styrene-butadiene-based copolymer (G1657 manufactured by Kraton Polymers) and 10 parts by weight of a tackifier (ARKON P-125 manufactured by Arakawa Chemical Industries, Ltd.)

The above-mentioned materials were formed by three-kind, three-layer T-die co-extrusion. Thus, a film-shaped pressure-sensitive adhesive tape (4A) (thickness: base material layer/first pressure-sensitive adhesive layer/second pressure-sensitive adhesive layer=40 µm/10 µm/10 µm) was obtained.

The pressure-sensitive adhesive tape (4A) was evaluated for its adhesion, peeling property from a guide roll, and rewinding property after the lapse of 12 hours from immediately after its production.

Table 1 shows the results.

### [Comparative Example 1]

The following compounds were prepared as a forming material of a base material layer, a forming material of a first pressure-sensitive adhesive layer, and a formingmaterial of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 75 parts by weight of a styrene-based thermoplastic elastomer formed of a hydrogenated product of a styrene-butadiene-based copolymer (G1657 manufactured by Kraton Polymers) and 25 parts by weight of a tackifier (ARKON P-125 manufactured by Arakawa Chemical Industries, Ltd.)

Forming material of second pressure-sensitive adhesive layer: A mixture of 75 parts by weight of a styrene-based thermoplastic elastomer formed of a hydrogenated product of a styrene-butadiene-based copolymer (G1657 manufactured by Kraton Polymers) and 25 parts by weight of a tackifier (ARKON P-125 manufactured by Arakawa Chemical Industries, Ltd.)

The above-mentioned materials were formed by three-kind, three-layer T-die co-extrusion. Thus, a film-shaped pressure-sensitive adhesive tape (C1A) (thickness: base material layer/first pressure-sensitive adhesive layer/second pressure-sensitive adhesive layer=40 µm/4 µm/4 µm) was obtained. The pressure-sensitive adhesive tape (C1A) was evaluated for its adhesion, peeling property from a guide roll, and rewinding property after the lapse of 12 hours from immediately after its production.

Table 2 shows the results.

### [Comparative Example 2]

The following compounds were prepared as a forming material of a base material layer, a forming material of a first pressure-sensitive adhesive layer, and a formingmaterial of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 50 parts by weight of a styrene-based thermoplastic elastomer formed of a hydrogenated product of a styrene-butadiene-based copolymer (G1657 manufactured by Kraton Polymers) and 50 parts by weight of a tackifier (ARKON P-125 manufactured by Arakawa Chemical Industries, Ltd.)

Forming material of second pressure-sensitive adhesive layer: A styrene-based thermoplastic elastomer formed of a hydrogenated product of a styrene-butadiene-based copolymer (G1657 manufactured by Kraton Polymers)

The above-mentioned materials were formed by three-kind, three-layer T-die co-extrusion. Thus, a film-shaped pressure-sensitive adhesive tape (C2A) (thickness: base material layer/first pressure-sensitive adhesive layer/second pressure-sensitive adhesive layer=40 µm/4 µm/4 µm) was obtained.

The pressure-sensitive adhesive tape (C2A) was evaluated for its adhesion, peeling property from a guide roll, and rewinding property after the lapse of 12 hours from immediately after its production.

Table 2 shows the results.

### [Comparative Example 3]

The following compounds were prepared as a forming material of a base material layer, a forming material of a first pressure-sensitive adhesive layer, and a formingmaterial of a second pressure-sensitive adhesive layer.

Forming material of base material layer: A low-density polyethylene (G201 manufactured by Sumitomo Chemical Co., Ltd.) Forming material of first pressure-sensitive adhesive layer: A mixture of 50 parts by weight of a styrene-based thermoplastic elastomer formed of a hydrogenated product of a styrene-butadiene-based copolymer (TUFTEC H1062 manufactured by Asahi Kasei Corporation) and 50 parts by weight of a tackifier (ARKON P-125 manufactured by Arakawa Chemical Industries, Ltd.)

Forming material of second pressure-sensitive adhesive layer: A styrene-based thermoplastic elastomer formed of a hydrogenated product of a styrene-butadiene-based copolymer (G1657 manufactured by Kraton Polymers)

The above-mentioned materials were formed by three-kind, three-layer T-die co-extrusion. Thus, a film-shaped pressure-sensitive adhesive tape (C3A) (thickness: base material layer/first pressure-sensitive adhesive layer/second pressure-sensitive adhesive layer=40 µm/4 µm/4 µm) was obtained.

The pressure-sensitive adhesive tape (C3A) was evaluated for its adhesion, peeling property from a guide roll, and rewinding property after the lapse of 12 hours from immediately after its production.

Table 2 shows the results.

### [Comparative Example 4]

The following compounds were prepared as a forming material of a base material layer, a forming material of a first pressure-sensitive adhesive layer, and a forming material of a second pressure-sensitive adhesive layer.

Forming material of base material layer: A low-density polyethylene (G201 manufactured by Sumitomo Chemical Co., Ltd.)

Forming material of first pressure-sensitive adhesive layer: A mixture of 65 parts by weight of a styrene-based thermoplastic elastomer formed of a hydrogenated product of a styrene-butadiene-based copolymer (G1657 manufactured by Kraton Polymers) and 35 parts by weight of a tackifier (ARKON P-125 manufactured by Arakawa Chemical Industries, Ltd.)

Forming material of second pressure-sensitive adhesive layer: A mixture of 85 parts by weight of a styrene-based thermoplastic elastomer formed of a hydrogenated product of a styrene-butadiene-based copolymer (G1657 manufactured by Kraton Polymers) and 15 parts by weight of a tackifier (ARKON P-125 manufactured by Arakawa Chemical Industries, Ltd.)

The above-mentioned materials were formed by three-kind, three-layer T-die co-extrusion. Thus, a film-shaped pressure-sensitive adhesive tape (C4A) (thickness: base material layer/first pressure-sensitive adhesive layer/second pressure-sensitive adhesive layer=40 µm/4 µm/4 µm) was obtained.

The pressure-sensitive adhesive tape (C4A) was evaluated for its adhesion, peeling property from a guide roll, and rewinding property after the lapse of 12 hours from immediately after its production.

Table 2 shows the results.

**[Table 1]**

| | | | Example 1 | Example 2 | Example 3 | Example 4 |
|---|---|---|---|---|---|---|
| Base material layer | Material name | | G201 | G201 | G201 | G201 |
| | Thickness (µm) | | 40 | 40 | 40 | 40 |
| First pressure-sensitive adhesive layer | Material name | Rubber-based resin component | G1657 | H1062 | H1041 | H1062 |
| | | Tackifier | P-125 | P-125 | P-125 | P-125 |
| | Rubber-based resin component/Tackifier (weight ratio) | | 50/50 | 50/50 | 50/50 | 60/40 |
| | Thickness (µm) | | 10 | 10 | 10 | 10 |
| Second pressure-sensitive adhesive layer | Material name | Rubber-based resin component | G1657 | G1657 | H1062 | G1657 |
| | | Tackifier | - | - | - | P-125 |
| | Rubber-based resin component/Tackifier (weight ratio) | | - | - | - | 90/10 |
| | Thickness (µm) | | 10 | 10 | 10 | 10 |
| Evaluation | Evaluation for adhesion (N/20 mm) | Initial stage | 0.32 | 0.29 | 0.52 | 0.35 |
| | | After 12 hours | 0.41 | 0.48 | 0.61 | 2.13 |
| | | After 24 hours | 2.19 | 2.11 | 2.35 | 1.98 |
| | Peeling property from guide roll | | ○ | ○ | ○ | ○ |
| | Rewinding property after lapse of 12 hours | | ○ | ○ | ○ | ○ |

**[Table 2]**

| | | | Comparative Example 1 | Comparative Example 2 | Comparative Example 3 | Comparative Example 4 |
|---|---|---|---|---|---|---|
| Base material layer | Material name | | G201 | G201 | G201 | G201 |
| | Thickness (µm) | | 40 | 40 | 40 | 40 |
| First pressure-sen sitive adhesive layer | Material name | Rubber-based resin component | G1657 | G1657 | H1062 | G1657 |
| | | Tackifier | P-125 | P-125 | P-125 | P-125 |
| | Rubber-based resin component/Tackifier (weight ratio) | | 75/25 | 50/50 | 50/50 | 65/35 |
| | Thickness (µm) | | 4 | 4 | 4 | 4 |
| Second pressure-sen sitive adhesive layer | Material name | Rubber-based resin component | G1657 | G1657 | G1657 | G1657 |
| | | Tackifier | P-125 | - | - | P-125 |
| | Rubber-based resin component/Tackifier (weight ratio) | | 75/25 | - | - | 85/15 |
| | Thickness (µm) | | 4 | 4 | 4 | 4 |
| Evaluation | Evaluation for adhesion (N/20 mm) | Initial stage | 2.18 | 0.35 | 0.29 | 1.01 |
| | | After 12 hours | 2.09 | 2.14 | 1.92 | 2.13 |
| | | After 24 hours | 2.12 | 2.20 | 2.38 | 2.02 |
| | Peeling property from guide roll | | x | ○ | ○ | x |
| | Rewinding property after lapse of 12 hours | | x | x | x | x |

According to the present invention, the pressure-sensitive adhesive tape has the base material layer, the first pressure-sensitive adhesive layer, and the second pressure-sensitive adhesive layer in the stated order. In addition, the content of the tackifier in the first pressure-sensitive adhesive layer is set to 12 wt% or more, the content of the tackifier in the second pressure-sensitive adhesive layer is set to 10 wt% or less, and the thickness of the second pressure-sensitive adhesive layer is set to 10 µm or more. As a result, the adhesion of the pressure-sensitive adhesive tape is kept weak upon its production because no tackifier is present on the surface of a pressure-sensitive adhesive layer (i.e., the surface portion of the second pressure-sensitive adhesive layer) or only a trace amount of the tackifier is present on the surface. Accordingly, as shown in Table 1, the peel failure, or the like, resulting from strong adherence of a pressure-sensitive adhesive layer to a roll or the like upon production of the pressure-sensitive adhesive tape can be sufficiently suppressed. As a result, stable product supply can be performed. Further, when the thickness of the second pressure-sensitive adhesive layer is set to 10 µm or more, the tackifier, which is present in the larger amount in the first pressure-sensitive adhesive layer upon production of the pressure-sensitive adhesive tape, uniformly diffuses over the two layers, i.e., the first pressure-sensitive adhesive layer and the second pressure-sensitive adhesive layer with time after the production, and hence the tackifier is sufficiently present in the second pressure-sensitive adhesive layer as well at the time of the use of the pressure-sensitive adhesive tape. As a result, after the lapse of about a half day from immediately after the production, the tackifier is moderately present on the surface of each pressure-sensitive adhesive layer, and hence the pressure-sensitive adhesive tape can be easily rewound. On the other hand, after the lapse of a predetermined time from the production (e.g., at the time of the use), the pressure-sensitive adhesive tape can express a sufficiently strong adhesion for an adherend (the fact is reflected in the data on adhesion after 12 hours in the evaluation for adhesion of Table 1 and in the evaluation for rewinding property after the lapse of 12 hours from immediately after production of the table) because the tackifier is sufficiently present on the surface of the pressure-sensitive adhesive layer.

Meanwhile, as shown in Comparative Examples 1 and 4 of Table 2, when the content of the tackifier in the first pressure-sensitive adhesive layer is set to 12 wt% or more, the content of the tackifier in the second pressure-sensitive adhesive layer is set to exceed 10 wt%, and the thickness of the second pressure-sensitive adhesive layer is set to less than 10 µm, the pressure-sensitive adhesive tape can express a strong adhesion at the time of its use as in the case of each example, but expresses a strong adhesion upon its production as well because the tackifier is present on the surface of a pressure-sensitive adhesive layer (i.e., the surface portion of the second pressure-sensitive adhesive layer). Accordingly, as shown in Table 2, a peeling failure resulting from strong adherence of the pressure-sensitive adhesive layer to a roll or the like upon production of the pressure-sensitive adhesive tape is observed. In addition, the thickness of the second pressure-sensitive adhesive layer is less than 10 µm, and hence the tackifier diffuses over the two layers, i.e., the first pressure-sensitive adhesive layer and the second pressure-sensitive adhesive layer in a uniform fashion with time at a higher rate than that of any one of Examples 1 to 4 after the production. As a result, after the lapse of about a half day from immediately after the production, the tackifier is sufficiently present on the surface of each pressure-sensitive adhesive layer, and hence the pressure-sensitive adhesive tape cannot be easily rewound.

In addition, as shown in Comparative Examples 2 and 3 of Table 2, even in the case where the content of the tackifier in the first pressure-sensitive adhesive layer is set to 12 wt% or more and the content of the tackifier in the second pressure-sensitive adhesive layer is set to 10 wt% or less, when the thickness of the second pressure-sensitive adhesive layer is less than 10 µm, a peeling failure resulting from strong adherence of a pressure-sensitive adhesive layer to a roll or the like upon production of the pressure-sensitive adhesive tape can be suppressed, but the tackifier diffuses over the two layers, i.e., the first pressure-sensitive adhesive layer and the secondpressure-sensitive adhesive layer in a uniform fashion with time at a higher rate than that of any one of Examples 1 to 4 after the production. As a result, after the lapse of about a half day from immediately after the production, the tackifier is sufficiently present on the surface of each pressure-sensitive adhesive layer, and hence the pressure-sensitive adhesive tape cannot be easily rewound.

In view of the foregoing, according to the present invention, compatibility betweensufficientsuppression of the peeling failure, or the like, resulting from strong adherence of a pressure-sensitive adhesive layer to a roll or the like upon production of the pressure-sensitive adhesive tape, easy rewinding property even after the lapse of about a half day from immediately after the production of the pressure-sensitive adhesive tape, and the expression of a sufficient adhesion after the lapse of a predetermined time from the production (at the time of the use of the pressure-sensitive adhesive tape) can be achieved in an extremely favorable manner.

The pressure-sensitive adhesive tape of the present invention can be preferably used for protecting an adherend such as a metal plate, a resin plate, or a glass plate by being attached to the adherend in various fields of applications for: the production of electronic parts; structures; automobiles; and the like. The pressure-sensitive adhesive tape can also be used in, for example, an external appearance-adjusting application, an ornamental application, and a label-application.

## Claims

1. A pressure-sensitive adhesive tape, comprising at least three layers including:
a base material layer (A);
a first pressure-sensitive adhesive layer (B1); and
a second pressure-sensitive adhesive layer (B2) in the stated order,
wherein:
the base material layer (A) contains a thermoplastic resin;
the first pressure-sensitive adhesive layer (B1) contains a tackifier at a content of 12 wt% or more;
the second pressure-sensitive adhesive layer (B2) contains a tackifier at a content of 10 wt% or less; and
the second pressure-sensitive adhesive layer (B2) has a thickness of 10 µm or more.

2. A pressure-sensitive adhesive tape according to claim 1, wherein the first pressure-sensitive adhesive layer (B1) contains a styrene-based thermoplastic elastomer.

3. A pressure-sensitive adhesive tape according to claim 1 or 2, wherein the second pressure-sensitive adhesive layer (B2) contains a styrene-based thermoplastic elastomer.

4. A pressure-sensitive adhesive tape according to any one of claims 1 to 3, wherein the base material layer (A) contains a polyethylene.

5. A pressure-sensitive adhesive tape according to any one of claims 1 to 4, wherein the base material layer (A) has a thickness of 10 µm to 150 µm.

6. A pressure-sensitive adhesive tape according to any one of claims 1 to 5, wherein the first pressure-sensitive adhesive layer (B1) has a thickness of 1 µm to 300 µm.

7. A pressure-sensitive adhesive tape according to any one of claims 1 to 6, wherein the second pressure-sensitive adhesive layer (B2) has a thickness of 10 µm to 300 µm.

8. A pressure-sensitive adhesive tape according to any one of claims 1 to 7, wherein the pressure-sensitive adhesive tape is obtained by a production method including subjecting at least three materials including a forming material (a) of the base material layer (A), a forming material (b1) of the first pressure-sensitive adhesive layer (B1), and a forming material (b2) of the second pressure-sensitive adhesive layer (B2) to co-extrusion.
